# EUROPEAN PATENT SPECIFICATION

(11) **EP 4 245 473 B1**
(45) Date of publication and mention of the grant of the patent: **27.08.2025**
(21) Application number: 20961310.8
(22) Date of filing: 20.11.2020
(51) Int. Cl.: B25J 9/16, B25J 19/00, H02J 7/00, G05D 1/247, G05D 1/661, G05D 105/15, G05D 107/20, G05D 109/10, G05D 111/30

(54) **AUTOMATIC CHARGING METHOD AND SYSTEM FOR ROBOT, AND ROBOT AND STORAGE MEDIUM**
VERFAHREN UND SYSTEM ZUM AUTOMATISCHEN LADEN FÜR ROBOTER SOWIE ROBOTER UND SPEICHERMEDIUM
PROCÉDÉ ET SYSTÈME DE CHARGE AUTOMATIQUE POUR ROBOT, ET ROBOT ET SUPPORT DE STOCKAGE

(30) Priority: 13.11.2020 CN 202011266977
(43) Date of publication of application: 20.09.2023
(73) Proprietor: Suzhou Cleva Precision Machinery & Technology Co., Ltd., Suzhou, Jiangsu 215000 (CN); Skybest Electric Appliance (Suzhou) Co., Ltd., Suzhou, Jiangsu 215000 (CN)
(72) Inventor: YUAN, Lichao, Suzhou, Jiangsu 215000 (CN); ZHU, Shaoming, Suzhou, Jiangsu 215000 (CN)
(74) Representative: Murgitroyd & Company
(86) International application number: PCT/CN2020/130295
(87) International publication number: WO 2022/099756

(56) References cited:
- CN-A- 105 467 983
- CN-A- 107 398 899
- CN-A- 108 142 069
- CN-A- 108 519 774
- CN-A- 109 428 351
- CN-A- 111 103 870
- KR-A- 20200 018 216
- US-A1- 2011 234 153
- US-A1- 2014 379 196
- US-A1- 2017 336 786

## Description

### Field of the Invention

The present invention relates to the field of intelligent control, in particular to a robot automatic charging method and system, a robot and a storage medium.

### Background of the Invention

Low repetition rate and high coverage are the goals pursued by traversing robots such as mobile robots for vacuuming, lawn mowing, and swimming pool cleaning. Taking a mobile robot like an intelligent robot mower as an example, the robot mower takes a lawn surrounded by the boundary as the working region for lawn mowing operations, while the outside of the lawn is defined as the non-working region.

In the prior art, the charging system of the robot is mainly composed of a charging station and a boundary line connected to the charging station. When the robot needs to be charged, the robot needs to walk along the boundary line to find a charging pile for connection and charging. In this charging method, the robot searches for the boundary without the principle of proximity. When there are obstacles near the boundary line, the robot needs to randomly search for the boundary line again. Thus, time is wasted, and the power consumption of the robot is increased accordingly.

KR20200018216A; US2017/336786A1 and CN108519774A all disclose systems where a signal is transmitted from a charging station or other transmission stations to provide location information to a robot and/or to direct the robot to the charging station. US2014/379196A1 discloses a system which includes an arrangement of boundary lines across a working area to allow a robot to determine location from the electromagnetic signature of the wires at different points.

### Summary of the Invention

In order to solve the above technical problems, the objectives of the present invention are to provide a robot automatic charging method, system, robot, and storage medium.

In order to achieve one of the above objectives of the present invention, an embodiment of the present invention provides a robot automatic charging method, which includes:
controlling a robot to start working within a working region;
when the robot needs to be charged, controlling the robot to move towards a charging station by wireless positioning until the robot moves into a range covered by a target signal, wherein the target signal is a signal from a charging station or a guiding device, wherein the guiding device is an electronic boundary line and the charging station is set on the electronic boundary line, wherein the electronic boundary line is spaced apart from a perimeter of the working region; detecting the strength of the target signal in the working region during the movement;
controlling the robot to adjust its moving direction based on the detected changes in the strength of the target signal to control the robot to move towards the electronic boundary line;
controlling the robot to move towards the electronic boundary line and then move along the electronic boundary line to the charging station.

Through the above method, the charging path can be planned in real-time through the changes in the position and signal strength of the charging station and robot, the charging time is saved, and the performance of the robot is improved.

Due to the diversity of charging methods, which can be wireless or wired, the way signals are sent is also diverse.

Due to the inability to detect signals in areas far from the charging station, wireless positioning is used to plan the charging path and improve the performance of the robot.

As a further improvement of an embodiment of the present invention, controlling the robot to adjust its moving direction based on the detected changes in the strength of the target signal to control the robot to move towards the electronic boundary line includes:
determining whether the strength of the detected target signal continues to increase,
if so, controlling the robot to move in the current direction;
if not, controlling the robot to move in the direction with the strongest strength of the target signal.

Through the above preferred embodiments, the robot can return to the charging station in the direction of the strongest signal, saving electricity and improving efficiency.

As a further improvement of an embodiment of the present invention, the method for controlling the robot to move in the direction with the strongest strength of the target signal includes:
firstly, controlling the robot to stop moving;
then, controlling the robot to rotate in place for one cycle and obtain the strongest signal value within one cycle;
finally, controlling the robot to rotate in place again until the detected signal value is closest to the strongest signal value and stop rotating, and move in the current direction.

Through the above preferred embodiment, the robot can easily and quickly find the direction with the strongest signal, saving the time for returning charging, and improving the performance of the robot.

The robot searches for a charging station through electronic boundary lines, improving the performance of the robot.

In order to achieve the other purpose of the above invention, an embodiment of the present invention provides a robot automatic charging system for performing the method as hereinbefore defined, which includes a charging station; an electronic boundary line configured to be spaced apart from a perimeter of a working region, wherein the charging station is configured to be set on the electronic boundary line; and a robot, wherein the robot includes a wireless positioning device operable to detect a target signal, wherein the robot is configured to move into the range covered by the target signal through wireless positioning, and then move towards the electronic boundary line and then move along the electronic boundary line to the charging station.

Through the above system, the charging path can be planned in real-time through the changes in the position and signal strength of the charging station and robot, the charging time is saved, and the performance of the robot is improved.

In order to achieve one of the above invention objectives, an embodiment of the present invention provides a robot, including a memory and a processor, wherein the memory stores a computer program, and the processor executes the computer program to achieve the steps of the robot automatic charging method as described above.

In order to achieve one of the above invention objectives, an embodiment of the present invention provides a readable storage medium on which a computer program is stored. When the computer program is executed by a processor, the steps of implementing the robot automatic charging method as described above are implemented.

Compared with existing technologies, the robot automatic charging method, system, robot, and storage medium of the present invention can plan the optimal charging path in real-time through the position of the charging station and robot, as well as changes in the signal strength of the charging station or electronic boundary line, enabling the robot to accurately and quickly find the charging station for docking and charging, saving the time for the robot to find the charging station, and thereby increasing the working time of the robot, improving the performance of robots.

### Brief Description of the Drawings

FIG.1 is a schematic diagram of an embodiment of the present invention;
FIG.2 is a schematic flowchart of the robot automatic charging method provided in an embodiment of the present invention;
FIG.3 is a schematic flowchart of a robot automatic charging method according to a preferred embodiment of the present invention;
FIG.4 is a schematic flowchart of a robot automatic charging method provided by a specific example according to a preferred embodiment of the present invention;

### Detailed Description of the Embodiments

The following will provide a detailed description of the present invention in conjunction with the various embodiments shown in the accompanying drawings. However, these embodiments do not limit the present invention, and any structural, method, or functional changes made by those of ordinary skill in the art based on these embodiments are included within the protection scope of the present invention.

The robot system of the present invention can be a robot mower system, a sweeping robot system, a snow sweeper system, a leaf suction machine system, a golf course ball picker system, etc. Each system can automatically move in the working region and perform corresponding work. In the specific example of the present invention, the robot mower system is taken as an example for detailed description, and correspondingly, the working region can be a lawn.

A robot mower system typically includes: a robot mower (RM) and a charging station. The robot mower includes a body, a moving unit and a control unit arranged on the body. The moving unit is used to control moving, steering, etc. of the robot; the control unit is used to plan the moving direction and moving path of the robot, store external parameters acquired by the robot, process and analyze the acquired parameters, and specifically control the robot according to the processing and analyzing results; The control unit is, such as MCU or DSP, etc. The robot and the charging station can be charged by docking the chip or pin, or by wireless charging, which will not be described in detail here. It should be noted that the robot mower of the present invention also includes a wireless positioning device, which can be used in various ways, such as GPS positioning, UWB positioning, or Zigbee positioning, etc. With the GPS positioning device, the present invention can record the position of the charging station and the position of the robot, and the coordinates recorded can be in various ways, such as using coordinates in electronic maps.

The robot mower of the present invention can further optionally include: a camera device and an electronic boundary line recognition device in cooperation with a control unit, wherein the camera device is used to acquire a scenario within a certain range of its viewing angle, and the camera device of the present invention is mainly used to identify a charging station; for example, the camera device identifies the position of the charging station by means of image analysis; the electronic boundary line recognition device is mainly used to identify electronic boundary lines; for example, identify electronic boundary lines connecting charging stations by means of electromagnetic induction; furthermore, the control unit is combined with GPS positioning device, camera device, and electronic boundary line recognition device to control the robot to search for the charging station and plan the optimal path from the current position to reach the charging station position; which will be described in detail below.

In addition, the robot also includes various sensors, storage modules, such as EPROM, Flash or SD cards, as well as working mechanisms for work, and power supply; in this embodiment, the working mechanism is a lawn mower disc, and the various sensors for sensing moving state of the moving robot, such as tipping, off-ground, collision sensors, geomagnetism, gyroscopes, etc., are not specifically described here.

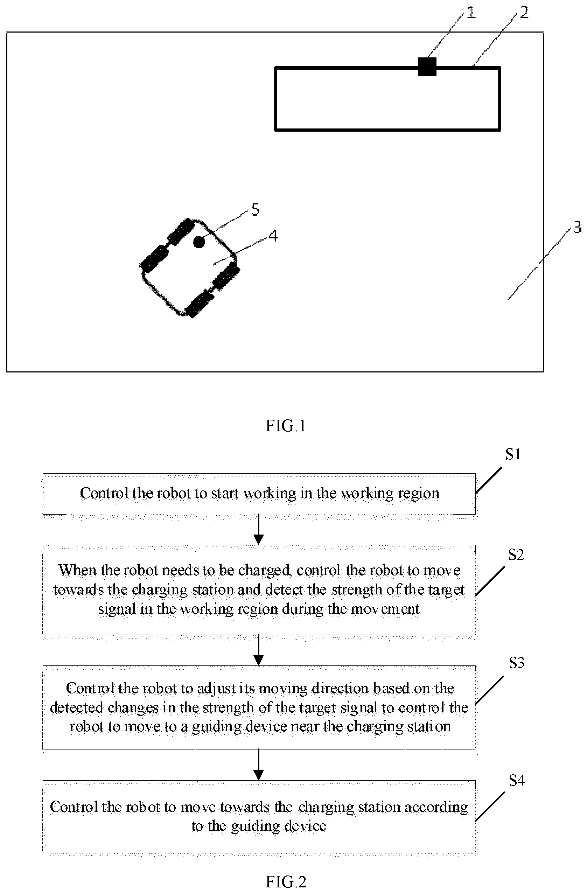

As shown in Fig. 1, the robot mower 4 is equipped with a GPS signal antenna 5. The robot mower 4 is powered by a battery and operates in the working region 3. When the power of the battery is low, the robot mower 4 searches for a charging station 1 to dock and charge. After the power of the battery is fully charged, it returns to the working region 3 to continue working. The charging docking method can be done by inserting a chip or a pin, and the charging method can be wireless charging or wired charging. In the embodiment of the present invention, a wired charging method is used. The charging station 1 is set on the electronic boundary line 2, and the mobile robot 4 moves along the electronic boundary line to the charging station after reaching the electronic boundary line 2 to achieve docking charging with the charging station.

As shown in Fig. 2, an embodiment of the present invention provides a robot automatic charging method, which comprises the following steps:
S1. Control the robot to start working in the working region;
S2. When the robot needs to be charged, control the robot to move towards the charging station and detect the strength of the target signal in the working region during the movement;
S3. Control the robot to adjust its moving direction based on the detected changes in the strength of the target signal to control the robot to move towards a guiding device near the charging station;
S4. Control the robot to move towards the charging station according to the guiding device.

For step S2, when the robot works, a charging instruction is issued to the robot by determining various rules. The rules are, for example: the available time of the battery is less than a certain value, the power of the battery is less than a certain value, and the working time of the robot reaches a certain value; when the robot receives a charging instruction, it will calculate the position coordinates of the charging station and the current position coordinates of the robot through the wireless positioning system, and then control the robot to move towards the charging station. However, due to the difficulty of the wireless positioning system in accurately positioning, the robot cannot accurately locate the charging station. Therefore, while the robot moves towards the charging station, it synchronously detects signals in the working region, When the robot moves into the range covered by the charging station or the electronic boundary line signal, it can detect the signal and assist the robot in accurately finding the charging station based on the detected changes in the strength of the signal.

For step S2, there are various ways to control the robot to move towards the charging station, such as positioning in electronic maps, positioning through GPS, UWB, or Zigbee, etc.; in the specific example of the present invention, the robot completes initialization at the charging station and records the current longitude and latitude coordinates of the charging station through GPS for subsequent calculation call; in other embodiments of the present invention, it is also possible to locate a position with a fixed distance from the charging station and obtain the position coordinates of the charging station through calculation.

For step S3, the signal strength of the charging station or electronic boundary line detected by the robot at a distance away from the charging station is weaker, and the farther it is, the weaker it becomes. If it exceeds a certain distance, the signal may not be detected. As the robot moves towards the charging station position, the strength of the detected signal will gradually increase. The closer it is to the charging station position or the closer it is to the electronic boundary line, the stronger the strength of the detected signal. In an embodiment of the present invention, due to the different arrangement shapes of the electronic boundary lines, the moving path of the robot is not fixed, and the strength of the electronic boundary line signal detected during the movement process will change. In order to enable the robot to quickly and efficiently move towards the charging electronic boundary line when returning to the charging station, the method adopted in the present invention is to control the robot to adjust its moving direction based on the strength changes of the detected signal, it is that make the robot move in the direction of stronger signals, it can shorten the time it takes for the robot to reach the charging station and save electricity.

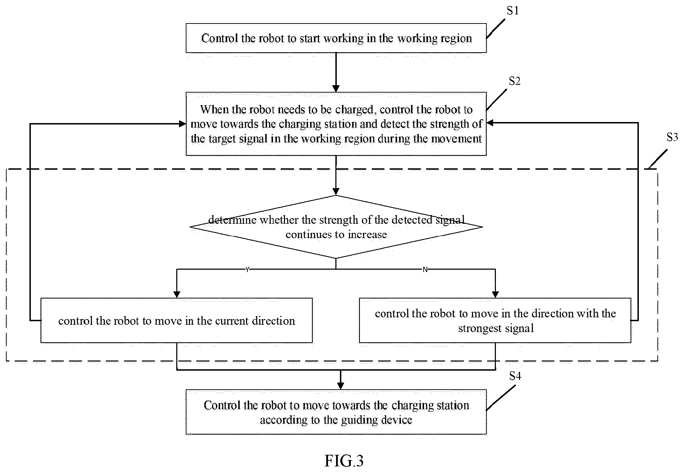

Specifically, as shown in Fig. 3, step S3 further comprises: determine whether the strength of the detected signal continues to increase; if so, control the robot to move in the current direction; if not, control the robot to move in the direction with the strongest signal. When the robot moves in the direction of the charging station, the closer it is to the electronic boundary line of the charging station, the stronger the detected electronic boundary line signal. Therefore, when the strength of the detected electronic boundary line signal becomes strongest, it indicates that the robot is moving in the direction of the closest electronic boundary line to the robot, which is the optimal direction of movement, So keeping the robot moving in its current direction can make it more efficient and precise to travel to the electronic boundary line. When the detected electronic boundary line signal begins to weaken, it indicates that the robot is not in the optimal direction of movement. Therefore, it is necessary to adjust the robot to continue moving in the optimal direction, that is, to continue moving in the direction with the strongest detected signal strength. There are various adjustment methods available here. Cycle through steps S2 to S3 until the robot reaches the guiding device near the charging station. In the embodiment of the present invention, the guiding device is the charging electronic boundary line, which can also be other guiding devices. Finally, execute step S4 to control the robot to move along the electronic boundary line and reach the charging station and dock with the charging station to achieve charging.

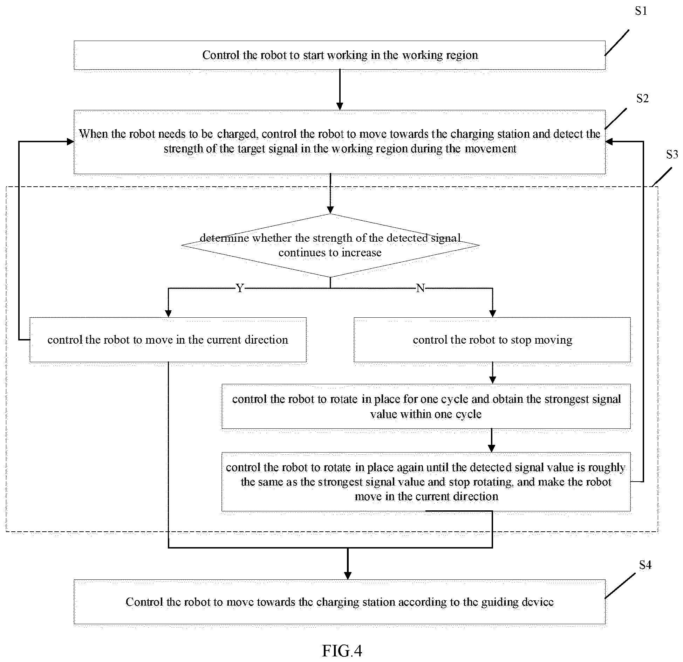

More specifically, as shown in Fig. 4, step S3 in one of the preferred embodiments includes: determine whether the detected signal strength continues to increase; If so, control the robot to keep moving in the current direction; If not, control the robot to stop moving, then control the robot to rotate in place for one cycle and obtain the strongest signal value within one cycle, then control the robot to rotate in place again until the detected signal value is roughly the same as the strongest signal value and stop rotating, and make the robot move in the current direction. When it is detected that the strength of the electronic boundary signal no longer continues to become stronger but begins to weaken, firstly control the robot to stop moving; secondly, control the robot to rotate clockwise or counterclockwise in place for one cycle, synchronously detect and record the signal size values during the rotation process, and obtain the strongest signal value maxSignal; then, rotate the robot clockwise or counterclockwise again and synchronously detect the signal size value. When the detected signal size value is equal to or closest to the value maxSignal, stop rotating which indicates that currently it has rotated to the direction with the strongest signal. Control the robot to continue moving in this direction. Due to the possibility of some accuracy or computational errors in practice, it is difficult to ensure that the detected signal values always remain exactly the same, so the values should be roughly close. Cycle through steps S2 to S3 until the robot reaches the electronic boundary line, and then execute step S4 to control the robot to move along the electronic boundary line and reach the charging station to dock with the charging station to achieve charging.

In an embodiment of the present invention, there is also provided a robot automatic charging system, which includes a charging station and a robot. After the robot moves into the range covered by the charging station signal through wireless positioning, the robot moves to the charging station along the direction where the signal strength of the charging station becomes stronger. If the charging station is set on the electronic boundary line, the robot moves into the range covered by the electronic boundary line signal through wireless positioning, and then moves to the charging station along the direction where the signal strength of the electronic boundary line becomes stronger. Technicians in the field can clearly understand that for the convenience and conciseness of the description, the specific working process of the system described above can refer to the corresponding process in the aforementioned method implementation, and will not be repeated here.

In an embodiment of the present invention, there is also provided a robot comprising a memory and a processor, wherein the memory stores a computer program, and the processor executes the computer program to implement the steps of the robot automatic charging method described in any of the aforementioned embodiments.

In one embodiment of the present invention, there is also provided a readable storage medium, on which a computer program is stored. When the computer program is executed by a processor, the steps of implementing the robot automatic charging method described in any of the in any of the aforementioned embodiments are implemented.

In summary, the robot automatic charging method and system of the present invention, as well as the robot and storage medium, can plan the charging path in real-time through the position of the charging station and the robot, save charging time, and improve the performance of the robot.

In the embodiment provided in this application, it should be understood that the disclosed modules, systems, and methods can all be implemented through other means. The system embodiment described above is only schematic, and the division of the modules is only a logical functional division. In actual implementation, there may be other division methods, such as multiple modules or components that can be combined or integrated into another system, or some features that can be ignored or not executed.

The modules described as separate components may or may not be physically separated, and the components displayed as modules may or may not be physical modules, that is, the components may be located at one place or may also be distributed on a plurality of network modules. Some or all of the modules can be selected according to actual requirements to achieve the objective of the solution in this embodiment.

In addition, each functional module in each implementation of the present application can be integrated into a single processing module, or each module can exist physically separately, or two or more modules can be integrated into one module. The integrated modules mentioned above can be implemented in both hardware and software functional modules.

## Claims

1. A robot automatic charging method, comprising:
controlling a robot (4) to start working within a working region (3);
when the robot (4) needs to be charged, controlling the robot (4) to move towards a charging station (1) by wireless positioning until the robot (4) moves into a range covered by a target signal, wherein the target signal is a signal from a charging station (1) or a guiding device, wherein the guiding device is an electronic boundary line (2) and the charging station (1) is set on the electronic boundary line (2), wherein the electronic boundary line (2) is spaced apart from a perimeter of the working region (3);
detecting the strength of the target signal in the working region (3) during the movement;
controlling the robot (4) to adjust its moving direction based on detected changes in the strength of the target signal to control the robot (4) to move towards the electronic boundary line (2);
controlling the robot (4) to move towards the electronic boundary line (2) and then move along the electronic boundary line (2) to the charging station (1).

2. The robot automatic charging method according to claim 1, wherein controlling the robot (4) to adjust its moving direction based on the detected changes in the strength of the target signal to control the robot (4) to move towards the electronic boundary line (2) comprises:
determining whether the strength of the detected target signal continues to increase,
if so, controlling the robot (4) to move in the current direction;
if not, controlling the robot (4) to move in the direction with the strongest strength of the target signal.

3. The robot automatic charging method according to claim 2, wherein the method for controlling the robot (4) to move in the direction with the strongest strength of the target signal comprises:
firstly, controlling the robot (4) to stop moving;
then, controlling the robot (4) to rotate in place for one cycle and obtain the strongest signal value within one cycle;
finally, controlling the robot (4) to rotate in place again until the detected signal value is closest to the strongest signal value and stop rotating, and move in the current direction.

4. A robot automatic charging system for performing the method of any preceding claim, comprising:
a charging station (1);
an electronic boundary line (2) configured to be spaced apart from a perimeter of a working region (3), wherein the charging station (1) is configured to be set on the electronic boundary line (2); and
a robot (4), wherein the robot (4) includes a wireless positioning device (5) operable to detect a target signal, wherein the robot (4) is configured to move into the range covered by the target signal through wireless positioning, and then move towards the electronic boundary line (2) and then move along the electronic boundary line (2) to the charging station (1).

5. A robot (4), comprising a memory and a processor, the memory storing a computer program, wherein the processor executes the computer program to achieve the steps of any one of the robot automatic charging methods in claims 1-3.

6. A readable storage medium on which a computer program is stored, wherein the steps of implementing the robot automatic charging method in any one of claims 1-3 are implemented when the computer program is executed by a processor.

## Patentansprüche

1. Ein Verfahren zum automatischen Laden von Robotern, das Folgendes beinhaltet:
Steuern eines Roboters (4), sodass er mit der Arbeit innerhalb einer Arbeitszone (3) beginnt;
wenn der Roboter (4) geladen werden muss, Steuern des Roboters (4), sodass er sich durch drahtloses Positionieren auf eine Ladestation (1) zu bewegt, bis sich der Roboter (4) in einen Bereich bewegt, der von einem Zielsignal abgedeckt wird, wobei das Zielsignal ein Signal von einer Ladestation (1) oder einer Führungsvorrichtung ist,
wobei die Führungsvorrichtung eine elektronische Grenzlinie (2) ist und die Ladestation (1) auf die elektronische Grenzlinie (2) gesetzt ist, wobei die elektronische Grenzlinie (2) von einer Peripherie der Arbeitszone (3) beabstandet ist;
Erfassen der Stärke des Zielsignals in der Arbeitszone (3) während der Bewegung;
Steuern des Roboters (4), um seine Bewegungsrichtung basierend auf erfassten Änderungen der Stärke des Zielsignals anzupassen, um den Roboter (4) zu steuern, sodass er sich auf die elektronische Grenzlinie (2) zu bewegt;
Steuern des Roboters (4), sodass er sich auf die elektronische Grenzlinie (2) zu bewegt und sich dann entlang der elektronischen Grenzlinie (2) zu der Ladestation (1) hin bewegt.

2. Verfahren zum automatischen Laden von Robotern gemäß Anspruch 1, wobei das Steuern des Roboters (4) zum Anpassen seiner Bewegungsrichtung basierend auf den erfassten Änderungen der Stärke des Zielsignals zur Steuerung des Roboters (4), sodass er sich auf die elektronische Grenzlinie (2) zu bewegt, Folgendes beinhaltet:
Bestimmen, ob die Stärke des erfassten Zielsignals weiter zunimmt,
wenn ja, Steuern des Roboters (4), sodass er sich in die aktuelle Richtung bewegt;
wenn nein, Steuern des Roboters (4), sodass er sich in die Richtung mit der stärksten Stärke des Zielsignals bewegt.

3. Verfahren zum automatischen Laden von Robotern gemäß Anspruch 2, wobei das Verfahren zum Steuern des Roboters (4), sodass er sich in die Richtung mit der stärksten Stärke des Zielsignals bewegt, Folgendes beinhaltet:
zuerst Steuern des Roboters (4), sodass er aufhört, sich zu bewegen;
dann Steuern des Roboters (4), sodass er sich einen Zyklus lang an Ort und Stelle dreht und den stärksten Signalwert innerhalb eines Zyklus erhält;
schließlich Steuern des Roboters (4), sodass er sich wiederum an Ort und Stelle dreht, bis der erfasste Signalwert dem stärksten Signalwert am nächsten kommt und er so aufhört, sich zu drehen, und sich in die aktuelle Richtung bewegt.

4. Ein System zum automatischen Laden von Robotern zum Durchführen des Verfahrens gemäß einem der vorhergehenden Ansprüche, das Folgendes beinhaltet:
eine Ladestation (1);
eine elektronische Grenzlinie (2), die so konfiguriert ist, dass sie von einer Peripherie einer Arbeitszone (3) beabstandet ist, wobei die Ladestation (1) so konfiguriert ist, dass sie auf die elektronische Grenzlinie (2) gesetzt wird; und
einen Roboter (4), wobei der Roboter (4) eine drahtlose Positionierungsvorrichtung (5) umfasst, die betreibbar ist, um ein Zielsignal zu erfassen, wobei der Roboter (4) so konfiguriert ist, dass er sich durch drahtloses Positionieren in den Bereich bewegt, der von dem Zielsignal abgedeckt wird, und sich dann auf die elektronische Grenzlinie (2) zu bewegt und sich dann entlang der elektronischen Grenzlinie (2) zu der Ladestation (1) hin bewegt.

5. Ein Roboter (4), der einen Speicher und einen Prozessor beinhaltet, wobei der Speicher ein Computerprogramm speichert, wobei der Prozessor das Computerprogramm ausführt, um die Schritte gemäß einem der Verfahren zum automatischen Laden von Robotern in den Ansprüchen 1-3 zu erreichen.

6. Ein lesbares Speichermedium, auf dem ein Computerprogramm gespeichert ist, wobei die Schritte des Implementierens des Verfahrens zum automatischen Laden von Robotern gemäß einem der Ansprüche 1-3 implementiert werden, wenn das Computerprogramm von einem Prozessor ausgeführt wird.

## Revendications

1. Un procédé de recharge automatique de robot, comprenant :
le fait de commander un robot (4) pour qu'il commence à travailler au sein d'une région de travail (3) ;
lorsque le robot (4) a besoin d'être rechargé, le fait de commander le robot (4) pour qu'il se déplace vers un point de recharge (1) par un positionnement sans fil jusqu'à ce que le robot (4) se déplace jusque dans une plage couverte par un signal cible, où le signal cible est un signal provenant d'un point de recharge (1) ou d'un dispositif de guidage, où le dispositif de guidage est une ligne de délimitation électronique (2) et le point de recharge (1) est établi sur la ligne de délimitation électronique (2), où la ligne de délimitation électronique (2) est espacée d'un périmètre de la région de travail (3) ;
le fait de détecter la force du signal cible dans la région de travail (3) au cours du déplacement ;
le fait de commander le robot (4) pour ajuster sa direction de déplacement sur la base de changements détectés dans la force du signal cible afin de commander le robot (4) pour qu'il se déplace vers la ligne de délimitation électronique (2) ;
le fait de commander le robot (4) pour qu'il se déplace vers la ligne de délimitation électronique (2) et qu'il se déplace ensuite le long de la ligne de délimitation électronique (2) jusqu'au point de recharge (1).

2. Le procédé de recharge automatique de robot selon la revendication 1, où le fait de commander le robot (4) pour ajuster sa direction de déplacement sur la base des changements détectés dans la force du signal cible afin de commander le robot (4) pour qu'il se déplace vers la ligne de délimitation électronique (2) comprend :
le fait de déterminer si la force du signal cible détectée continue d'augmenter,
si c'est le cas, le fait de commander le robot (4) pour qu'il se déplace dans la direction actuelle ;
si ce n'est pas le cas, le fait de commander le robot (4) pour qu'il se déplace dans la direction présentant la force du signal cible la plus forte.

3. Le procédé de recharge automatique de robot selon la revendication 2, où le procédé pour commander le robot (4) pour qu'il se déplace dans la direction présentant la force du signal cible la plus forte comprend :
tout d'abord, le fait de commander le robot (4) pour qu'il arrête de se déplacer ;
ensuite, le fait de commander le robot (4) pour qu'il tourne sur place pendant un cycle et qu'il obtienne la valeur de signal la plus forte au sein d'un cycle ;
enfin, le fait de commander le robot (4) pour qu'il tourne à nouveau sur place jusqu'à ce que la valeur de signal détectée soit la plus proche de la valeur de signal la plus forte et qu'il arrête de tourner, et qu'il se déplace dans la direction actuelle.

4. Un système de recharge automatique de robot pour réaliser le procédé de n'importe quelle revendication précédente, comprenant :
un point de recharge (1) ;
une ligne de délimitation électronique (2) configurée pour être espacée d'un périmètre d'une région de travail (3), où le point de recharge (1) est configuré pour être établi sur la ligne de délimitation électronique (2) ; et
un robot (4), le robot (4) incluant un dispositif de positionnement sans fil (5) pouvant fonctionner pour détecter un signal cible, le robot (4) étant configuré pour se déplacer dans la plage couverte par le signal cible par le biais d'un positionnement sans fil, et ensuite pour se déplacer vers la ligne de délimitation électronique (2) et ensuite pour se déplacer le long de la ligne de délimitation électronique (2) jusqu'au point de recharge (1).

5. Un robot (4), comprenant une mémoire et un processeur, la mémoire stockant un programme d'ordinateur, où le processeur exécute le programme d'ordinateur pour parvenir aux étapes de n'importe lequel des procédés de recharge automatique de robot dans les revendications 1 à 3.

6. Un support de stockage lisible sur lequel un programme d'ordinateur est stocké, où les étapes consistant à mettre en œuvre le procédé de recharge automatique de robot dans n'importe laquelle des revendications 1 à 3 sont mises en œuvre lorsque le programme d'ordinateur est exécuté par un processeur.
